# EUROPÄISCHE PATENTSCHRIFT

(11) **EP 2 517 928 B1**
(45) Veröffentlichungstag und Bekanntmachung des Hinweises auf die Patenterteilung: **23.03.2016**
(21) Anmeldenummer: 12163471.1
(22) Anmeldetag: 05.04.2012
(51) Int. Cl.: B60N 2/70, B60N 2/56

(54) **Fahrzeugsitz und Verfahren zum Herstellen eines Fahrzeugsitzpolsterteils**
Vehicle seat and method for producing a vehicle seat upholstery section
Siège de véhicule et procédé destiné à la fabrication d'un élément de rembourrage de siège de véhicule

(30) Priorität: 28.04.2011 DE 102011019000
(43) Veröffentlichungstag der Anmeldung: 31.10.2012
(73) Patentinhaber: GRAMMER AG, 92224 Amberg (DE)
(72) Erfinder: Übelacker, Roland, 92536 Pfreimd (DE)
(74) Vertreter: Hannke, Christian

(56) Entgegenhaltungen:
- EP-A1- 1 389 558
- DE-A1- 19 801 172
- DE-U1-202007 002 196

## Beschreibung

Die Erfindung betrifft einerseits einen Fahrzeugsitz mit einem Sitzteil, mit einer Rückenlehne und mit zumindest einem luftdurchlässigen Polsterteil umfassend wenigstens eine Hauptpolsterung, eine Sperrschicht und einen Polsterbezug, wobei die Sperrschicht zwischen der Hauptpolsterung und dem Polsterbezug oder einer Trägerschicht hiervon angeordnet ist, insbesondere nach dem Oberbegriff des Anspruchs 1.

Die Erfindung betrifft andererseits ein Verfahren zum Herstellen eines entsprechenden Fahrzeugsitzpolsterteils, bei welchem ein Polsterbezug, eine Sperrschicht und/oder eine Trägerschicht für den Polsterbezug zu einer Materialbahn miteinander verbunden werden, und bei welchem an die Materialbahn eine Hauptpolsterung angeschäumt wird, insbesondere nach dem Oberbegriff des Anspruchs 7.

Gattungsgemäße Fahrzeugsitze und Verfahren zum Herstellen diesbezüglicher Fahrzeugsitzpolsterteile sind aus dem Stand der Technik vielfältig und gut bekannt. Bei diesen Fahrzeugsitzpolsterteilen sind ein Polsterbezug und einer diesem Polsterbezug gegebenenfalls noch zugeordnete Trägerschicht großflächig und durchgängig mit einer Sperrschichtfolie kaschiert. Die Sperrschichtfolie ist hierbei mit der eigentlichen Polsterung des Fahrzeugsitzes hinterschäumt, so dass insgesamt ein kompaktes Fahrzeugsitzpolsterteil zur Verfügung steht.

Ein weiterer Fahrzeugsitz ist aus der EP 1 389 558 A1 bekannt. Es ist Aufgabe der vorliegenden Erfindung, einen Fahrzeugsitz, welcher eine einfache und kostengünstige Herstellung ermöglicht, sowie ein entsprechendes Verfahren zum Herstellen, bereitzustellen.

Diese Aufgabe der Erfindung wird von einem Fahrzeugsitz nach Anspruch 1 bzw. einem Verfahren zum Herstellen nach Anspruch 7 gelöst.

Durch den luftdurchlässigen Polsterkern und die diesbezügliche durch die Hauptpolsterung hindurch bis an den luftdurchlässigen Polsterkern reichende Belüftungseinrichtung kann baulich sehr einfach eine hervorragende Einstellung unterschiedlicher Polsterteilhärten in einem Sitzbereich sowohl an dem Sitzteil als auch an der Rückenlehne des Fahrzeugsitzes erzielt werden.

Der Begriff "Polsterteil" beschreibt im Sinne der Erfindung jegliche Einrichtung, mittels welcher der Fahrzeugsitz gepolstert werden kann. Insofern kann das Polsterteil an dem Sitzteil und/oder an der Rückenlehne vorgesehen sein, um den Sitzkomfort für einen Benutzer des Fahrzeugsitzes komfortabler zu gestalteten.

Mit dem Begriff "Hauptpolsterung" wird vorliegend jegliche Einrichtung erfasst, mittels welcher das Sitzteil bzw. die Rückenlehen mit einer Grundpolsterung großflächig bedeckt und gepolstert werden kann. In der Regel wird die Hauptpolsterung aus einem Reaktionsgemisch, etwa als Kaltschaumbauteil, erzeugt.

Damit der Polsterbezug räumlich gut von seinem Unterbau, insbesondere gegenüber der Hauptpolsterung, isoliert werden kann, ist es vorteilhaft, wenn eine Sperrschicht an dem Polsterbezug vorgesehen wird.

Die vorliegende Sperrschicht kann mittels einer herkömmlichen Folie, wie etwa einer Polyurethan-Folie oder dergleichen, realisiert sein, wie dies auch im Stand der Technik bereits üblich ist.

Als Polsterbezug kann ein für Fahrzeugsitze übliches Stoffmaterial, Leder oder dergleichen eingesetzt werden.

In der Regel ist der Polsterbezug mit einem Schnittschaum hinterlegt, welcher vorliegend die erwähnte Trägerschicht ausgestalten kann, so dass insbesondere eine gute Verarbeitung gewährleistet werden kann. Sie kann jedoch auch durch andere Werkstoffe formuliert sein.

Der Begriff "luftdurchlässiger Polsterkern" beschreibt im Sinne der Erfindung einen weiteren Funktionsbereich bzw. eine weitere Komponente des Polsterteils, durch welchen bzw. durch welche eine besonders gute Härteabstimmung am Polsterteil, sowohl an dem Sitzteil als auch an der Rückenlehne des Fahrzeugsitzes, erzielt wird.

Vorteilhaft ist es, wenn der luftdurchlässige Polsterkern einstückig und nur partiell in dem Polsterteil integriert ist, so dass nicht die gesamte Sitzfläche des Fahrzeugsitzes mit dem luftdurchlässigen Polsterkern unterlegt ist.

Vorteilhafter Weise kann der luftdurchlässige Polsterkern auch von einem zusätzlichen Schaumkern, der sich durch besonders gute Luftdurchlässigkeitseigenschaften auszeichnet, bereitgestellt werden. Beispielsweise ist der luftdurchlässige Polsterkern aus einem retikulierten Schaum, einem Abstandsgewebe oder dergleichen hergestellt.

Insofern sieht eine bevorzugte Ausführungsvariante vor, dass der luftdurchlässige Polsterkern einen offenporigeren Materialkörper als die Hauptpolsterung umfasst.

Im einfachsten Fall kann der luftdurchlässige Polsterkern sogleich von einer Trägerschicht ausgestaltet werden. Die Trägerschicht ist hierbei im dem Bereich, in welchem der luftdurchlässige Polsterkern vorgesehen sein soll, dicker ausgebildet als in den umliegenden Bereichen, in welchen der Polsterbezug noch von der Trägerschicht hinterlegt ist. Vorteilhafter Weise kann hierdurch der Aufbau des Polsterteils besonders einfach realisiert werden.

Es hat sich herausgestellt, dass es zudem vorteilhaft ist, wenn der luftdurchlässige Polsterkern eine Dicke aufweist, welche mehr als das Doppelte, vorzugsweise mehr als das Dreifache, der Stärke der verwendeten Trägerschicht beträgt, da hierdurch eine besonders vielfältige Härteabstimmung im Bereich des luftdurchlässigen Polsterkerns erzielt werden kann.

Darüber hinaus ist es vorteilhaft, wenn die Dicke des luftdurchlässigen Polsterkerns weniger als dreiviertel, vorzugsweise die Hälfte oder weniger, der Höhe der Hauptpolsterung beträgt. Hierdurch kann sichergestellt werden, dass dem Polsterteil durch eine ausreichend hohe Hauptpolsterung insgesamt noch eine gute Festigkeit und damit eine genügende Widerstandsfähigkeit und Formstabilität bei Belastung innewohnt, da der luftdurchlässige Polsterkern aufgrund seiner größeren Offenporigkeit weicher ausgelegt ist als das Material der Hauptpolsterung.

Die Dicke des luftdurchlässigen Polsterkerns, die Stärke der Trägerschicht und die Höhe der Hauptpolsterung werden im Wesentlichen senkrecht zum Polsterbezug gemessen.

Die Stabilität des Polsterteils kann nochmals weiter verbessert werden, wenn der luftdurchlässige Polsterkern über die Fläche des Polsterteils parzelliert angeordnet ist. Beispielsweise ist der luftdurchlässige Polsterkern auch nicht als ein Einzelgebilde realisiert, sondern er kann in viele Parzellen unterteilt in das Polsterteil integriert sein.

Eine Härteabstimmung kann am Fahrzeugsitz weiter verbessert werden, wenn der luftdurchlässige Polsterkern unmittelbar an dem Polsterbezug oder an einer Trägerschicht des Polsterbezugs angrenzt.

Beispielsweise ist der luftdurchlässige Polsterkern aufkaschiert, etwa mittels thermischen Klebekaschierens.

In diesem Zusammenhang ist es vorteilhaft, wenn die dem Polsterbezug zugeordnete Sperrschicht lediglich in Randbereichen des Polsterbezugs in Gestalt von voneinander beabstandeten Sperrschichtlängsstreifen vorgesehen ist.

Vorzugsweise sind die Sperrschichtlängsstreifen auf dem Polsterbezug links und rechts aufkaschiert, beispielsweise durch Flammkaschieren oder Klebekaschieren. Sie können jedoch auch durch andere Techniken vorteilhaft an den Polsterbezug angebracht werden.

Insofern verlaufen die Sperrschichtlängsstreifen in Sitzrichtung beidseits der seitlichen Sitzteilseiten und/oder beidseits der seitlichen Rückenlehnenseiten, so dass die Sperrschicht lediglich partiell auf dem Polsterbezug oder der Trägerschicht hiervon aufgebracht ist. Dazwischen ist keine solche Kaschierung vorgesehen. Somit kann der luftdurchlässige Polsterkern problemlos direkt mit dem Polsterbezug oder der Trägerschicht hiervon in Kontakt treten. Insofern kann eine gute Luftzirkulation vom Polsterbezug zu einem Unterbau eines Fahrzeugsitzes erfolgen.

Um bei einem Hinterschäumen insbesondere des luftdurchlässigen Polsterkerns verhindern zu können, dass ein hierbei eingesetztes Reaktionsgemisch unbeabsichtigt in Poren des luftdurchlässigen Polsterkerns gelangen kann, ist der luftdurchlässige Polsterkern von der Hauptpolsterung durch eine Sperrschichtlage räumlich getrennt.

Vorzugsweise weist der luftdurchlässige Polsterkern an den der Hauptpolsterung zugewandten Seiten anstelle der Sperrschicht eine andere Sperrschichtlage auf. So ist es möglich, den luftdurchlässigen Polsterkern bereits als vorgefertigte Bauteilgruppe an den Polsterbezug bzw. an eine Trägerschicht hiervon anzubringen.

Auch die vorliegende Sperrschichtlage kann mittels einer üblichen Folie, wie etwa einer Polyurethan-Folie oder dergleichen, realisiert sein.

Bestehen die Sperrschicht und die Sperrschichtlage aus einem identischen Material, kann eine besonders innige Verbindung zwischen ihnen gewährleistet werden. Es versteht sich, dass die Sperrschichtlage auch aus einem Material bestehen kann, welches von der Sperrschicht zwischen der Hauptpolsterung und dem Polsterbezug verschieden ist.

Des Weiteren ist es vorteilhaft, wenn die Sperrschichtlage im Randbereich des luftdurchlässigen Polsterkerns mit der Sperrschicht verbunden ist. Beispielsweise sind die Sperrschicht und die Sperrschichtlage miteinander verklebt.

Eine besonders bevorzugte Ausführungsvariante sieht vor, dass die Belüftungseinrichtung wenigstens ein Belüftungsloch umfasst, welches unterhalb des luftdurchlässigen Polsterkerns durch die Hauptpolsterung hindurch bis an den luftdurchlässigen Polsterkern oder bis an eine Sperrschichtlage des luftdurchlässigen Polsterkerns heranreicht. Hierdurch kann konstruktiv sehr einfach eine betriebssichere Luftzuführung bezüglich des luftdurchlässigen Polsterkerns gewährleistet werden.

Vorteilhafter Weise sind eine Vielzahl an Belüftungslöchern vorgesehen, so dass eine besonders weiträumige und damit gute Belüftung des luftdurchlässigen Polsterkerns erreicht werden kann.

Weist eine Sperrschichtlage des luftdurchlässigen Polsterkerns im Bereich der Belüftungseinrichtung, insbesondere im Bereich von Belüftungslöchern der Belüftungseinrichtung, Durchbrüche auf, kann die durch die Belüftungslöcher strömende Luft auch die Sperrschichtlage ohne größeren Widerstand passieren.

Insofern ist es außergewöhnlich vorteilhaft, wenn zwischen dem Polsterkern und der Hauptpolsterung eine bereichsweise durchlöcherte Sperrschichtlage angeordnet ist.

Die Durchbrüche können durch eine geeignete Werkzeugform bereits beim Schäumen eines Reaktionsgemisches oder aber erst nach dem Schäumen, beispielsweise durch brennen, stechen, bohren oder fräsen, erzeugt werden.

Nach einem weiteren Aspekt der Erfindung wird deren Aufgabe auch von einem Verfahren zum Herstellen eines Fahrzeugsitzpolsterteils gelöst, bei welchem ein Polsterbezug, eine Sperrschicht und/oder eine Trägerschicht für den Polsterbezug zu einer Materialbahn miteinander verbunden werden, und bei welchem an die Materialbahn eine Hauptpolsterung angeschäumt wird, wobei sich das Verfahren dadurch auszeichnet, dass die Sperrschicht als voneinander beabstandete Randlängsstreifen in Randlängsbereichen des Polsterbezugs oder der Trägerschicht aufgebracht wird, dass ein luftdurchlässiger Polsterkern in einem Mittenbereich des Polsterbezugs unmittelbar an den Polsterbezug oder die Trägerschicht angebracht wird, dass der luftdurchlässige Polsterkern von der Hauptpolsterung umschäumt wird, wobei in der Hauptpolsterung wenigstens ein Belüftungsloch zum Belüften des Polsterkerns eingebracht wird.

Durch eine derartige Verfahrensweise kann das Polsterteil für den Fahrzeugsitz besonders einfach und kostengünstig hergestellt werden.

Vorteilhaft ist vorgesehen, dass an dem luftdurchlässigen Polsterkern vor dessen Anbringen an dem Polsterbezug bzw. der Trägerschicht oder danach eine Sperrschichtlage angebracht wird. Hierdurch kann ein Eindringen eines Reaktionsgemisches in den luftdurchlässigen Polsterkern gut verhindert werden, wie vorstehend bereits beschrieben.

Um einen besonders guten Luftaustausch zwischen den Belüftungslöschern und dem luftdurchlässigen Polsterkern zu erzielen, kann die Sperrschichtlage an den Belüftungslöschern zusätzlich durch stoßen sein, sofern die Sperrschichtlage von Haus aus nicht ausreichend luftdurchlässig ist.

In diesem Zusammenhang wird die Aufgabe der Erfindung auch von einem gattungsgemäßen Fahrzeugsitzpolsterteil gelöst, welches sich dadurch auszeichnet, dass das Fahrzeugsitzpolsterteil einen von einer Hauptpolsterung verschiedenen zusätzlichen luftdurchlässigen Polsterkern aufweist, in dessen angrenzenden Bereich die Hauptpolsterung eine Einrichtung zum Belüften des luftdurchlässigen Polsterkerns aufweist, bei welchem idealerweise der luftdurchlässige Polsterkern unmittelbar an einem Polsterbezug oder an einer Trägerschicht des Polsterbezugs angrenzt, und der luftdurchlässige Polsterkern von der Hauptpolsterung idealerweise durch eine Sperrschichtlage räumlich getrennt ist, wobei die Sperrschichtlage an Öffnungen von Belüftungslöchern der Belüftungseinrichtung gegebenenfalls noch durchbrochen ist.

Durch einen derartigen vorteilhaften Aufbau kann insbesondere das Fahrzeugsitzpolsterteil baulich und herstellungstechnisch besonders einfach bereitgestellt werden.

Nach einem weiteren Aspekt der Erfindung wird deren Aufgabe auch von einer Verwendung einer Hauptpolsterung eines Fahrzeugsitzpolsterteils als Belüftungseinrichtung eines in der Hauptpolsterung zumindest teilweise eingebetteten luftdurchlässigen Polsterkerns gelöst, da zum Realisieren einer derartigen Belüftungseinrichtung, mittels welcher insbesondere der luftdurchlässiger Polsterkern belüftet wird, nur die Hauptpolsterung benötigt wird, wodurch vorteilhafter Weise auf zusätzliche Belüftungseinrichtungsbauteile verzichtet werden kann.

Weitere Vorteile, Ziele und Eigenschaften vorliegender Erfindung werden anhand anliegender Zeichnung und nachfolgender Beschreibung erläutert, in welchen beispielhaft ein erfindungsgemäßer Fahrzeugsitz und ein möglicher Verfahrensablauf zur Herstellung eines diesbezüglichen Fahrzeugsitzpolsterteils dargestellt und beschrieben sind. In der Zeichnung zeigen:
- Figur 1: schematisch eine perspektivische Ansicht eines Fahrzeugsitzes mit einem Polsterteil umfassend einen zusätzlichen luftdurchlässigen Polsterkern; und
- Figuren 2 bis 4: schematisch einen ersten bevorzugten Verfahrensablauf zum Herstellen eines Fahrzeugsitzpolsterteils.

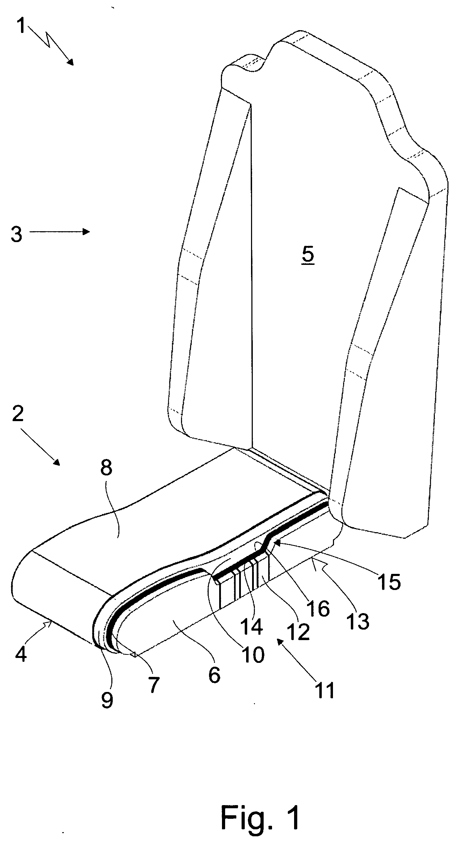

Der in der Figur 1 gezeigte Fahrzeugsitz 1 weist ein Sitzteil 2 und eine Rückenlehne 3 auf. Sowohl das Sitzteil 2 als auch die Rückenlehne 3 sind jeweils durch ein Polsterteil 4 bzw. 5 bedeckt. Der strukturelle Aufbau der Polsterteile 4 und 5 wird nachstehend stellvertretend anhand des Polsterteils 4 des Sitzteils 2 erläutert.

Das Polsterteil 4 umfasst im Wesentlichen eine Hauptpolsterung 6, eine Sperrschicht 7, einen Polsterbezug 8 und eine Trägerschicht 9, wobei die Sperrschicht 7 zwischen der Hauptpolsterung 6 und der Trägerschicht 9 angeordnet ist.

Der Polsterbezug 8 besteht in diesem Ausführungsbeispiel aus einem Stoffmaterial, die Sperrschicht 7 aus einer Polyurethan-Folie, die Trägerschicht 9 aus einem offenporigen Schnittschaum und die Hauptpolsterung 6 aus einem aufgeschäumten Kaltschaum, wobei der Schnittschaum offenporiger ausgestaltet ist als der Kaltschaum.

Darüber hinaus ist in das Polsterteil 4 ein luftdurchlässiger Polsterkern 10 integriert, zu welchem durch die Hauptpolsterung 6 hindurch eine Einrichtung 11 zum Belüften des luftdurchlässigen Polsterkerns 10 führt.

Die Belüftungseinrichtung 11 besteht aus einer Vielzahl an Belüftungslöchern 12 (hier nur exemplarisch beziffert), die im Wesentlichen von einer Sitzteilunterseite 13 senkrecht durch die Hauptpolsterung 6 hindurch zu dem luftdurchlässigen Polsterkern 10 geführt sind. Insofern ist die Belüftungseinrichtung 11 zumindest im Bereich der Hauptpolsterung 6 unmittelbar von dem Material der Hauptpolsterung 6 realisiert.

Damit eine räumliche Verbindung zwischen den einzelnen Belüftungslöchern 12 der Belüftungseinrichtung 11 und dem luftdurchlässigen Polsterkern 10 besonders gut durchlässig gewährleistet werden kann, sind oberhalb der einzelnen Belüftungslöcher 12 jeweils Durchbrüche 14 (hier nur exemplarisch beziffert) in die Sperrschicht 7 eingebracht.

Der luftdurchlässige Polsterkern 10 ist in diesem Ausführungsbeispiel unmittelbar durch einen dickeren Bereich 15 der Trägerschicht 9 ausgestaltet und grenzt auch unmittelbar an den Polsterbezug 8 an.

Darüber hinaus ist der luftdurchlässige Polsterkern 10 durch eine Sperrschichtlage 16 von der Hauptpolsterung 6 getrennt, die in diesem Ausführungsbeispiel direkt von der Sperrschicht 7 gebildet ist. Durch die räumliche Trennung kann beim Schäumen der Hauptpolsterung 6 verhindert werden, dass ein entsprechendes Reaktionsgemisch in Poren (hier nicht explizit gezeigt) des luftdurchlässigen Polsterkerns 10 dringt und diese für eine Luftaufnahme unbrauchbar macht oder dadurch eine Luftaufnahmefähigkeit nachteilig reduziert ist.

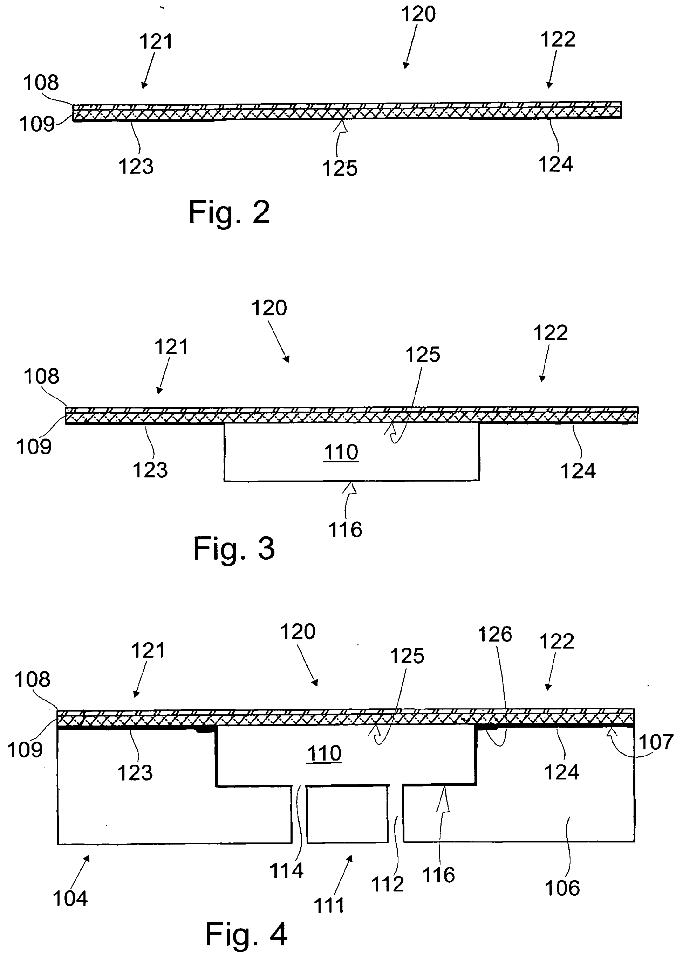

Bei dem in den Figuren 2 bis 4 gezeigten Verfahrensablauf wird in einem ersten Schritt auf einem Polsterbezug 108 aus einem Stoffmaterial eine Trägerschicht 109 aus einem Schnittschaum aufkaschiert.

Auf diese so ausgestaltete Materialbahn 120 wird anschließen in Randbereichen links 121 und rechts 122 jeweils eine Sperrschicht 107 als voneinander beabstandete Randlängsstreifen 123 und 124 auf die Trägerschicht 109 aufkaschiert (siehe Figur 2).

Die Sperrschicht 107 bedeckt die Trägerschicht 109 somit lediglich partiell und insofern nicht vollständig, wie dies im Stand der Technik bisher bei gattungsgemäßen Polsterteilen für Fahrzeugsitze üblich ist.

Zwischen diesen beiden voneinander beabstandeten Randlängsstreifen 123 und 124 verbleibt ein unkaschierter Mittenbereich 125, an welchen in einem weiteren Schritt ein luftdurchlässiger Polsterkern 110 unmittelbar aufkaschiert wird (siehe Figur 3).

Der luftdurchlässige Polsterkern 110 ist bereits vor dem Aufkaschieren auf die Trägerschicht 109 mit einer Sperrschichtlage 116 ausgerüstet, die in einem Randnebenbereich 126 des luftdurchlässigen Polsterkerns 110 jeweils mit den Randlängsstreifen 123 bzw. 124 der Sperrschicht 107 verklebt wird.

Die Sperrschichtlage 116 befindet sich demnach im Wesentlichen nur an Bereichen des luftdurchlässigen Polsterkerns 110, welche nicht unmittelbar mit der Trägerschicht 109 in Wirkkontakt treten.

Sowohl die Sperrschicht 107 als auch die Sperrschichtlage 116 bestehen in diesem Ausführungsbeispiel aus einer Polyurethan-Folie.

Mittels der Sperrschichtlage 116 wird der luftdurchlässige Polsterkern 110 vorteilhafter Weise insbesondere gegenüber einem Reaktionsgemisch zum Schäumen einer Hauptpolsterung 106 abgeschirmt, welche in einem weiteren Schritt an die Sperrschichtlage 116 bzw. an die Randlängsstreifen 123 und 124 der Sperrschicht 107 entsprechend angeschäumt wird (siehe Figur 4).

Hierzu wird der Aufbau gemäß der Figur 3 in ein Hinterschäumwerkzeug (hier nicht gezeigt) eingelegt und ein entsprechender Hohlraum mit dem Reaktionsgemisch befüllt.

Hierbei ist es vorteilhaft, wenn der Mittenbereich 125 polsterbezugsseitig durch eine Auflage des Hinterschäumwerkzeugs unterstützt wird, so dass der luftdurchlässige Polsterkern 110 beim Hinterschäumen in Position gehalten wird. Beispielsweise können hierzu entsprechende Auflagedorne an einem Verschlussdeckel des Hinterschäumwerkzeugs vorgesehen werden.

Damit dem luftdurchlässigen Polsterkern 110 immer eine ausreichend große Menge an Prozessluft insbesondere zugeführt werden kann, wird die Hauptpolsterung 106 mit Belüftungslöchern 112 und die Sperrschichtlage 116 mit Durchbrüchen 114 an den Belüftungslöchern 112 versehen.

Entweder werden die Belüftungslöcher 112 durch eine entsprechende Ausgestaltung des Hinterschäumwerkzeugs direkt beim Schäumen in die Hauptpolsterung 106 eingebracht. Oder sie werden nachträglich in die Hauptpolsterung 106 hinein gebohrt.

Die Belüftungslöcher 112 stellen hierbei eine Belüftungseinrichtung 111 für den luftdurchlässigen Polsterkern 110 dar.

Die Durchbrüche 114 werden anschließend durch die Belüftungslöcher 112 hindurch mit einem Stechwerkzeug in die Sperrschichtlage 116 hinein gestochen, wobei auch andere Techniken zum Einsatz kommen können, um die Durchbrüche 114 vorteilhaft herzustellen. Jedenfalls kann so später durch die Hauptpolsterung 106 hindurch eine gute Luftzirkulation vom Polsterbezug 108 zum Unterbau hin eines hier nicht gezeigten Fahrzeugsitzes gewährleistet werden.

Die Hauptpolsterung 106 ist hierbei aus einem härteren und dichteren Werkstoff hergestellt als der luftdurchlässige Polsterkern 110. Insofern ist die Hauptpolsterung 106 im Wesentlichen luftundurchlässig, so dass sie sich auch besonders gut als Belüftungseinrichtung 111 eignet.

Mit dem weicheren luftdurchlässigen Polsterkern 110 kann eher eine vielfältige Härteeinstellung am Polsterteil 104 vorgenommen werden, je nachdem wie viel Luft durch die Belüftungslöcher 112 zugeführt bzw. abgeführt wird.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

### Bezugszeichenliste

- 1: Fahrzeugsitz
- 2: Sitzteil
- 3: Rückenlehne
- 4; 104: erstes Polsterteil
- 5: weiteres Polsterteil
- 6; 106: Hauptpolsterung
- 7; 107: Sperrschicht
- 8; 108: Polsterbezug
- 9; 109: Trägerschicht
- 10; 110: luftdurchlässiger Polsterkern
- 11; 111: Belüftungseinrichtung
- 12; 112: Belüftungslöcher
- 13: Sitzteilunterseite
- 14; 113: Durchbrüche
- 15: dickerer Bereich
- 16; 116: Sperrschichtlage

- 120: Materialbahn
- 121: linker Randbereich
- 122: rechter Randbereich
- 123: linker Randlängsstreifen
- 124: rechter Randlängsstreifen
- 125: unkaschierter Mittenbereich
- 126: Randnebenbereich

## Patentansprüche

1. Fahrzeugsitz (1) mit einem Sitzteil (2), mit einer Rückenlehne (3) und mit zumindest einem Polsterteil (4, 5; 104) umfassend wenigstens eine Hauptpolsterung (6; 106), eine Sperrschicht (7; 107) und einen Polsterbezug (8; 108), wobei die Sperrschicht (7; 107) zwischen der Hauptpolsterung (6; 106) und dem Polsterbezug (8; 108) oder einer Trägerschicht (9; 109) hiervon angeordnet ist,
wobei das Polsterteil (4, 5; 104) einen von der Hauptpolsterung (6; 106) verschiedenen zusätzlichen luftdurchlässigen Polsterkern (10; 110) aufweist, in dessen angrenzenden Bereich die Hauptpolsterung (6; 106) eine Einrichtung (11; 111) zum Belüften des luftdurchlässigen Polsterkerns (10; 110) aufweist,
**dadurch gekennzeichnet, dass**
der luftdurchlässige Polsterkern (10; 110) als vorgefertigte Bauteilgruppe an dem Polsterbezug (8; 108) oder an der Trägerschicht (9; 109) angebracht ist, wobei der luftdurchlässige Polsterkern (10; 110) von der Hauptpolsterung (6; 106) durch eine Sperrschichtlage (16; 116) räumlich getrennt ist.

2. Fahrzeugsitz (1) nach Anspruch 1,
**dadurch gekennzeichnet, dass**
der luftdurchlässige Polsterkern (10; 110) einen offenporigeren Materialkörper als die Hauptpolsterung (6; 106) umfasst.

3. Fahrzeugsitz (1) nach einem der Ansprüche 1 oder 2,
**dadurch gekennzeichnet, dass**
die Sperrschichtlage (116) in einem Randnebenbereich (126) des luftdurchlässigen Polsterkerns (110) mit der Sperrschicht (107) verbunden ist.

4. Fahrzeugsitz (1) nach einem der Ansprüche 1 bis 3,
**dadurch gekennzeichnet, dass**
die Belüftungseinrichtung (11; 111) wenigstens ein Belüftungsloch (12; 112) umfasst, welches unterhalb des luftdurchlässigen Polsterkerns (10; 110) durch die Hauptpolsterung (6; 106) hindurch bis an den luftdurchlässigen Polsterkern (10; 110) oder bis an eine Sperrschichtlage (16; 116) des luftdurchlässigen Polsterkerns (10; 110) heranreicht.

5. Fahrzeugsitz (1) nach einem der Ansprüche 1 bis 4,
**dadurch gekennzeichnet, dass**
eine Sperrschichtlage (16; 116) des luftdurchlässigen Polsterkerns (10; 110) im Bereich der Belüftungseinrichtung (11; 111), insbesondere im Bereich von Belüftungslöchern (12; 112) der Belüftungseinrichtung (11; 111), Durchbrüche (14; 114) aufweist.

6. Fahrzeugsitz (1) nach einem der Ansprüche 1 bis 5,
**dadurch gekennzeichnet, dass**
eine Trägerschicht (9; 109) des Polsterbezugs (8; 108) ein Schnittschaummaterial umfasst.

7. Verfahren zum Herstellen eines Polsterteils (4, 5; 104) für einen Fahrzeugsitz nach einem der vorhergehenden Ansprüche, bei welchem ein Polsterbezug (8; 108), eine Sperrschicht (7; 107) und/oder eine Trägerschicht (9; 109) für den Polsterbezug (8; 108) zu einer Materialbahn (120) miteinander verbunden werden, und bei welchem an die Materialbahn (120) eine Hauptpolsterung (6; 106) angeschäumt wird,
**dadurch gekennzeichnet, dass**
die Sperrschicht (7; 107) als voneinander beabstandete Randlängsstreifen (123, 124) in Randlängsbereichen (121, 122) des Polsterbezugs (8; 108) oder der Trägerschicht (9; 109) aufgebracht wird, dass ein luftdurchlässiger Polsterkern (10; 110) in einem Mittenbereich (125) des Polsterbezugs (8; 108) unmittelbar an den Polsterbezug (8; 108) oder die Trägerschicht (9; 109) angebracht wird, dass der luftdurchlässige Polsterkern (10; 110) von der Hauptpolsterung (6; 106) umschäumt wird, wobei in der Hauptpolsterung (6; 106) wenigstens ein Belüftungsloch (12; 112) zum Belüften des luftdurchlässigen Polsterkerns (10; 110) eingebracht wird, wobei an dem luftdurchlässigen Polsterkern (10; 110) vor dessen Anbringen an dem Polsterbezug (8; 108) bzw. der Trägerschicht (9; 109) oder danach eine Sperrschichtlage (16; 116) angebracht wird.

## Claims

1. Vehicle seat (1) comprising a seat part (2), a backrest (3) and at least one cushion part (4, 5; 104) comprising at least one main cushioning part (6; 106), a barrier coating (7; 107) and a cushion covering (8; 108), the barrier coating (7; 107) being arranged between the main cushioning part (6; 106) and the cushion covering (8; 108) or a substrate layer (9; 109) thereof,
the cushion part (4, 5; 104) comprising an additional cushion core (10; 110) which is air-permeable and different from the main cushioning part (6; 106), the main cushioning part (6; 106) comprising, in the region adjacent to said cushion core, a device (11; 111) for ventilating the air-permeable cushion core (10; 110),
**characterised in that**
the air-permeable cushion core (10; 110) is mounted on the cushion covering (8; 108) or on the substrate layer (9; 109) as a prefabricated assembly, the air-permeable cushion core (10; 110) being spatially separated from the main cushioning part (6; 106) by a barrier layer (16; 116).

2. Vehicle seat (1) according to claim 1,
**characterised in that**
the air-permeable cushion core (10; 110) comprises a more open-pored material body than the main cushioning part (6; 106).

3. Vehicle seat (1) according to either claim 1 or claim 2,
**characterised in that**
the barrier layer (116) is connected to the barrier coating (107) in an edge-adjacent region (126) of the air-permeable cushion core (11).

4. Vehicle seat (1) according to any of claims 1 to 3,
**characterised in that**
the ventilation device (11; 111) comprises at least one ventilation hole (12; 112) which extends underneath the air-permeable cushion core (10; 110) through the main cushioning part (6; 106) as far as the air-permeable cushion core (10; 110) or as far as a barrier layer (16; 116) of the air-permeable cushion core (10; 110).

5. Vehicle seat (1) according to any of claims 1 to 4,
**characterised in that**
a barrier layer (16; 116) of the air-permeable cushion core (10; 110) comprises openings (14; 114) in the region of the ventilation device (11; 111), in particular in the region of ventilation holes (12; 112) in the ventilation device (11; 111).

6. Vehicle seat (1) according to any of claims 1 to 5,
**characterised in that**
a substrate layer (9; 109) of the cushion covering (8; 108) comprises a cut foam material.

7. Method for producing a cushion part (4, 5; 104) for a vehicle seat according to any of the preceding claims, in which a cushion covering (8; 108), a barrier coating (7; 107) and/or a substrate layer (9; 109) for the cushion covering (8; 108) are interconnected so as to form a material web (120), and in which a main cushioning part (6; 106) is foamed onto the material web (120),
**characterised in that**
the barrier coating (7; 107) is applied in the form of longitudinal edge strips (123, 124) which are spaced apart from one another in longitudinal edge regions (121, 122) of the cushion covering (8; 108) or of the substrate layer (9; 109), **in that** an air-permeable cushion core (10; 110) in a central region (125) of the cushion covering (8; 108) is mounted directly on the cushion covering (8; 108) or the substrate layer (9; 109), **in that** the air-permeable cushion core (10; 110) is surrounded by foam by the main cushioning part (6; 106), at least one ventilation hole (12; 112) for ventilating the air-permeable cushion core (10; 110) being made in the main cushioning part (6; 106), a barrier layer (16; 116) being mounted on the air-permeable cushion core (10; 110) prior to said cushion core being mounted on the cushion covering (8; 108) or the substrate layer (9; 109) respectively, or thereafter.

## Revendications

1. Siège de véhicule (1) avec une partie d'assise (2), avec un dossier (3) et avec au moins une partie rembourrée (4, 5 ; 104) comprenant au moins un rembourrage principal (6 ; 106), une couche de barrière (7 ; 107) et un revêtement de rembourrage (8 ; 108), la couche de barrière (7 ; 107) se trouvant entre le rembourrage principal (6 ; 106) et le revêtement de rembourrage (8 ; 108) ou une couche de support (9 ; 109),
la partie rembourrée (4, 5 ; 104) comprenant un noyau de rembourrage (10 ; 110) perméable à l'air supplémentaire différent du rembourrage principal (6 ; 106), dans la partie adjacente duquel la partie de rembourrage (6 ; 106) comprend un dispositif (11 ; 111) pour la ventilation du noyau de rembourrage (10 ; 110) perméable à l'air, **caractérisé en ce que**
le noyau de rembourrage (10 ; 110) perméable à l'air est appliqué sous la forme d'un sous-ensemble préfabriqué sur le revêtement de rembourrage (8 ; 108) ou sur la couche de support (9 ; 109), le noyau de rembourrage (10 ; 110) perméable à l'air étant séparé physiquement du rembourrage principal (6 ; 106) par une couche de barrière (16 ; 116).

2. Siège de véhicule (1) selon la revendication 1,
**caractérisé en ce que**
le noyau de rembourrage (10 ; 110) perméable à l'air comprend un corps de matériau à pores plus ouverts que le rembourrage principal (6 ; 106).

3. Siège de véhicule (1) selon la revendication 1 ou 2,
**caractérisé en ce que**
la couche de barrière (116) est reliée, dans une partie voisine du bord (126) du noyau de rembourrage (110) perméable à l'air, avec la couche de barrière (107).

4. Siège (1) selon l'une des revendications 1 à 3,
**caractérisé en ce que**
le dispositif de ventilation (11 ; 111) comprend au moins un trou de ventilation (12 ; 112), qui arrive en dessous du noyau de rembourrage (10 ; 110) perméable à l'air, à travers le rembourrage principal (6 ; 106) jusqu'au noyau de rembourrage (10 ; 110) perméable à l'air ou jusqu'à une couche de barrière (16; 116) du noyau de rembourrage (10 ; 110) perméable à l'air.

5. Siège (1) selon l'une des revendications 1 à 4,
**caractérisé en ce qu'**
une couche de barrière (16 ; 116) du noyau de rembourrage (10 ; 110) perméable à l'air comprend, au niveau du dispositif de ventilation (11 ; 111), plus particulièrement au niveau des trous de ventilation (12 ; 112) du dispositif de ventilation (11 ; 111), des passages (14 ; 114).

6. Siège (1) selon l'une des revendications 1 à 5,
**caractérisé en ce qu'**
une couche de support (9 ; 109) du revêtement de rembourrage (8 ; 108) comprend une mousse découpée.

7. Procédé de fabrication d'une partie de rembourrage (4, 5 ;104) pour un siège de véhicule selon l'une des revendications précédentes, dans lequel un revêtement de rembourrage (8 ; 108), une couche de barrière (7 ; 107) et/ou une couche de support (9 ; 109) pour le revêtement de rembourrage (8 ; 108) sont reliés entre eux en une bande de matériau (120) et dans lequel un rembourrage (6 ; 106) est appliqué par moussage sur la bande de matériau (120),
**caractérisé en ce que**
la couche de barrière (7 ; 107) est appliquée sous la forme de bande longitudinales de bord (123, 124) sur des parties longitudinales de bord (121, 122) du revêtement de rembourrage (8 ; 108) ou de la couche de support (9 ; 109), **en ce qu'**un noyau de rembourrage (10 ; 110) perméable à l'air est appliqué, dans une partie centrale (125) du revêtement de rembourrage (8 ; 108), directement sur le revêtement de rembourrage (8 ; 108) ou sur la couche de support (9 ; 109), **en ce que** le noyau de rembourrage (10 ; 110) perméable à l'air est entouré de mousse par le rembourrage principal (6 ; 106), au moins un trou de ventilation (12 ; 112) étant réalisé dans le rembourrage principal (6 ; 106) pour la ventilation du noyau de rembourrage (10 ; 110) perméable à l'air, une couche de barrière (16 ; 116) étant appliquée sur le noyau de rembourrage (10 ; 110) perméable à l'air, avant ou après son application sur le revêtement de rembourrage (8; 108) ou sur une couche de support (9; 109) respectivement.
